# EUROPÄISCHE PATENTSCHRIFT

(11) **EP 4 449 304 B1**
(45) Veröffentlichungstag und Bekanntmachung des Hinweises auf die Patenterteilung: **02.09.2026**
(21) Anmeldenummer: 22835788.5
(22) Anmeldetag: 15.12.2022
(51) Int. Cl.: G06K 19/077, B65D 75/30, G08B 13/24, B29C 65/00, G09F 3/02

(54) **KENNZEICHNUNGSETIKETT**
IDENTIFICATION LABEL
ÉTIQUETTE D'IDENTIFICATION

(30) Priorität: 17.12.2021 DE 102021133664
(43) Veröffentlichungstag der Anmeldung: 23.10.2024
(73) Patentinhaber: Schreiner Group GmbH & Co. KG, 85764 Oberschleissheim (DE)
(72) Erfinder: KLUGE, Martin, 86343 Königsbrunn (DE); ACHSNICH, Melanie, 80997 München (DE); ADELSBERGER, Joseph, 85465 Langenpreising (DE); WILLNER, Frank, 80637 München (DE)
(74) Vertreter: Epping - Hermann - Fischer
(86) Internationale Anmeldenummer: PCT/EP2022/086103
(87) Internationale Veröffentlichungsnummer: WO 2023/111162

(56) Entgegenhaltungen:
- WO-A1-2005/002992
- DE-A1- 10 158 095
- DE-A1- 102006 053 471
- DE-A1- 102019 127 537
- DE-C1- 10 153 145
- US-A1- 2004 099 744
- US-A1- 2007 051 473
- US-A1- 2020 134 408

## Beschreibung

Die vorliegende Erfindung betrifft ein Kennzeichnungsetikett, das auf einfache und kostengünstige Weise eine zuverlässige und langlebige Kennzeichnung eines Gegenstands ermöglicht. Die Erfindung betrifft ferner ein Kennzeichnungssystem mit einem solchen Kennzeichnungsetikett und ein Verfahren zum Herstellen eines solchen Kennzeichnungsetiketts.

Etiketten können der Autorisierung oder dem Herkunftsnachweis dienen und überall dort zum Einsatz kommen, wo es notwendig ist, Gegenstände zu identifizieren oder zu verifizieren. Einige Etiketten weisen elektronische Bauteile, wie RFID-Transponder, auf, welche zum Beispiel ein komfortables Auffinden und elektronisches Erfassen von Informationen der Etiketten und damit versehener Informationen ermöglichen.

Das Dokument US 2004 / 0099744 A1 offenbart einen Transponder, der einen Chip und eine Spule umfasst, die einen Teil einer Resonanzantenne ausbildet. Die Elemente sind in einem Metallgehäuse untergebracht, das mit einem Deckel verschlossen ist.

Das Dokument DE 101 58 095 A1 offenbart ein Prüfverfahren zur Qualitätsprüfung einer Schweißnaht, bei dem ein Werkstück mit einem Material verwendet wird, das ein für elektromagnetische Strahlung einer definierten Frequenz durchlässig ist. Um die Schweißnaht zuverlässig prüfen zu können, wird eine elektromagnetische Prüfstrahlung in das Innere des Werkstücks eingestrahlt. Die resultierenden Reflexionen zwischen den Grenzflächen im Werkstück und den aus dem Werkstück austretenden Teilen der Prüfstrahlung werden durch die Qualität der erzeugten Schweißnaht beeinflusst.

Das Dokument WO 2005 / 002992 A1 offenbart eine Transporttasche, die aus miteinander verbundenen Teilen eines flexiblen Gewebe- oder Folienmaterials besteht und die optional einen oder mehrere Trageriemen aufweist. In der Transporttasche sind ein oder mehrere passive Transponderelemente angeordnet.

Das Dokument DE 10 2006 053 471 A1 offenbart eine Verpackung mit einem Verbundmaterial, das auf eine Transponderkarte, wie beispielsweise eine Kreditkarte oder eine Debitkarte, aufgebracht ist. Das Verbundmaterial umfasst Kunststoffschichten und eine Metallschicht. Die Kunststoff- und die Metallschicht sind fest miteinander verbunden und die Metallschicht ist zwischen den Kunststoffschichten angeordnet.

Es ist eine Aufgabe, die der Erfindung zugrunde liegt, ein Kennzeichnungsetikett bereitzustellen, das auf einfache und kostengünstige Weise herstellbar ist und das eine zuverlässige und langlebige Kennzeichnung eines Gegenstands ermöglicht.

Die Aufgabe wird durch die Merkmale der unabhängigen Patentansprüche gelöst. Vorteilhafte Weiterbildungen sind in den jeweiligen abhängigen Patentansprüchen angegeben.

Gemäß einem Aspekt der Erfindung umfasst ein Kennzeichnungsetikett einen RFID-Transponder mit einem RFID-Chip und einer Antennenstruktur, die signaltechnisch miteinander gekoppelt sind, und eine Versiegelungsschicht, die den RFID-Transponder bedeckt. Die Versiegelungsschicht ist als flexibles Folienelement ausgebildet. Das Folienelement ist als Kunststofffolie realisiert und dazu eingerichtet, mittels Schweißen stoffschlüssig mit einem Untergrund verbunden zu werden, sodass der RFID-Chip und/oder die Antennenstruktur von einer Schweißnaht umgeben und zwischen der Versiegelungsschicht und dem Untergrund eingeschlossen ist.

Mittels des Kennzeichnungsetiketts ist auf einfache und kostengünstige Weise ein sicheres und zuverlässiges elektronisches Kennzeichnen eines Gegenstands einrichtbar. Das Kennzeichnungsetikett ist aufgrund der verschließenden Schweißnaht gegen unerwünschte Einwirkungen von außen, beispielsweise in Form von Feuchtigkeit, zuverlässig geschützt. Zum Beispiel kann das Kennzeichnungsetikett als RFID-Etikett mit verschweißtem Rand ausgebildet und im medizinischen oder pharmazeutischen Bereich eingesetzt werden, um Spritzen oder Gefäße zu kennzeichnen, die üblicherweise mittels Sterilisierungsvorgängen, wie Autoklavieren, behandelt werden. Aufgrund des beschriebenen Aufbaus des Kennzeichnungsetiketts wird dann einem Eindringen von Dampf oder Flüssigkeit in den Bereich des RFID-Transponders zuverlässig entgegengewirkt, sodass das Kennzeichnungsetikett ohne wesentliche Beeinträchtigung seiner Funktionalität an dem Gegenstand verbleibt.

Es ist eine Erkenntnis im Zusammenhang mit der vorliegenden Erfindung, dass konventionelle elektronische Etiketten mit RFID-Funktionalität aufgrund von eindringender Feuchtigkeit Korrosion und Performanceeinbußen erleiden können. Trotz des Einsatzes von Schutzfolien kann Feuchtigkeit weiterhin seitlich durch Klebstoffschichten dringen und in den sensiblen Bereich der RFID-Funktionalität gelangen und die Funktionalität über kurz oder lang nachteilig beeinträchtigen. Eine Verwendung entsprechender Etiketten für zu sterilisierende Produkte ist daher nicht möglich oder birgt ein hohes Risiko hinsichtlich seiner Funktionalität.

Mittels des beschriebenen Kennzeichnungsetiketts und der verschließenden Schweißnaht wird eine Feuchtigkeitsbarriere gezielt bereitgestellt, sodass die RFID-Funktionalität auch nach Autoklaviervorgängen erhalten bleibt und im Allgemeinen ein zuverlässiger Schutz des RFID-Transponders vor chemischen und/oder physikalischen Einflüssen eingerichtet ist.

Gemäß einer Weiterbildung des Kennzeichnungsetiketts umfasst der RFID-Transponder eine Trägerschicht, auf der der RFID-Chip und die Antennenstruktur angeordnet sind, und die die Versiegelungsschicht ausbildet, die mittels der Schweißnaht mit dem Untergrund stoffschlüssig verbunden ist. Alternativ kann eine solche Trägerschicht des RFID-Transponders den Untergrund ausbilden, mit dem die Versiegelungsschicht mittels der Schweißnaht stoffschlüssig verbunden ist. Die Trägerschicht ist zum Beispiel als Polyethylen (PE)- oder als Polyethylenterephthalat (PET)-Folienelement ausgebildet, die mittels Aufschmelzen mit dem Untergrund verbunden wird. Darüber hinaus sind auch weitere thermoplastische Kunststoffe oder Kunststoffe oder Materialien allgemein möglich, die mittels Schweißen, Siegeln oder Schmelzen stoffschlüssig mit einem Untergrund verbindbar sind. Die Trägerschicht bildet eine Komponente des RFID-Transponders aus, welche zugleich als Versiegelungsschicht fungieren kann. Alternativ kann die Trägerschicht eine Auflage für den RFID-Chip und die Antenne bilden und mittels einer separaten Versiegelungsschicht bedeckt sein, die zum Beispiel als eine folienbasierte Oberschicht eingerichtet ist. Ferner kann der RFID-Transponder mit der Trägerschicht auch ohne fixierende Kopplung mit der Oberschicht beziehungsweise der Versiegelungsschicht und/oder dem Untergrund frei beweglich, sozusagen frei schwimmend, zwischen diesen Komponenten angeordnet und eingeschlossen sein.

Ferner kann das Kennzeichnungsetikett eine Unterschicht aufweisen, die den Untergrund ausbildet, mit dem die Versiegelungsschicht mittels der Schweißnaht stoffschlüssig verbunden ist. Die Unterschicht kann als Folienelement, wie eine PET- oder PE-Folie, realisiert sein und mit der zuvor beschriebenen Trägerschicht des RFID-Transponders verschweißt sein. Sofern zusätzlich eine Oberschicht vorhanden ist, die die Versiegelungsschicht ausbildet, kann die Unterschicht mit der Oberschicht und optional auch mit der Trägerschicht verschweißt sein und den RFID-Transponder umschließen.

Bevorzugt werden gleiche Folientypen miteinander verschweißt, sodass zum Beispiel die Versiegelungsschicht als PET-Folie und der Untergrund als Unterschicht in Form einer weiteren PET-Folie ausgebildet sind. Alternativ können auch unterschiedliche, miteinander verschweißbare Materialien der Versiegelungsschicht und des Untergrunds vorgesehen sein. Zum Beispiel können auch teilkristalline und amorphe Folientypen miteinander gemischt beziehungsweise stoffschlüssig verbunden werden. Jeweils ist ein Verbund von mindestens einer schmelz- oder siegelbaren Versiegelungsschicht mit einem Untergrund ausbildbar, der auch das Trägermaterial des RFID-Transponders realisieren kann. Darüber hinaus können auch weitere Schichten mit in den Aufbau des Kennzeichnungsetiketts integriert werden, sodass zum Beispiel ein Aufbau eines mehrlagigen Verbundsystems mit verschiedenen Funktionsschichten realisiert wird.

Die verarbeiteten Folien der Versiegelungsschicht und/oder des Untergrunds haben beispielsweise eine Dicke von 15µm - 500µm, um definierte Eigenschaften, wie eine hohe Flexibilität, einen hohen Widerstand gegenüber mechanischen Einflüssen oder einen Lichtschutz bereitzustellen. Die Dicke bezieht sich dabei auf eine Stapelrichtung quer zu einer Haupterstreckungsebene des Kennzeichnungsetiketts, wobei die Stapelrichtung in einem an einem Gegenstand applizierten Zustand im Wesentlichen einer Oberflächennormalen des Gegenstands entspricht.

Die zuvor beschriebene Unterschicht kann eine Komponente des Kennzeichnungsetiketts ausbilden oder alternativ dem Gegenstand zugehörig sein, an dem das Kennzeichnungsetikett angebracht werden soll. Zum Beispiel ist die Unterschicht durch ein bereits angebrachtes Etikett oder ein Folienelement, wie eine Schrumpffolie, ausgebildet, das an einer Spritze angebracht ist. Demgemäß kann das Etikett oder die Schrumpffolie die Unterschicht ausbilden, die mit der Versiegelungsschicht des Kennzeichnungsetiketts mittels Schweißen stoffschlüssig verbunden wird.

Alternativ kann auch der Gegenstand selbst die Unterschicht beziehungsweise den Untergrund ausbilden, mit dem die Versiegelungsschicht des Kennzeichnungsetiketts mittels Schweißen stoffschlüssig verbunden wird. Beispielsweise ist eine Kunststoffspritze vorgesehen, deren Oberfläche einen verschweißbaren Untergrund ausbildet. Auf diesem Untergrund beziehungsweise an einer solchen Oberfläche kann die Versiegelungsschicht angebracht und stoffschlüssig mittels Schweißen verbunden werden. Somit können der RFID-Chip und die Antennenstruktur mit dem Trägermaterial beziehungsweise mit der Versiegelungsschicht direkt auf einen festen Untergrund oder ein Bauteil aufgebracht werden. Das Trägermaterial dient dem Selbstschutz des RFID-Transponders. Das elektronische Kennzeichnungsetikett kann demgemäß in einer Vorstufe lediglich bereits durch den RFID-Transponder und die Versiegelungsschicht bereitgestellt sein und wird durch die stoffschlüssige Schweißverbindung mit dem dafür vorgesehenen Untergrund als Endprodukt ausgebildet.

Das Kennzeichnungsetikett kann mittels eines besonders einfachen und übersichtlichen Aufbaus realisiert werden und erfordert keine zusätzlichen Barriereelemente, Schutzkörper oder Zusatzschichten, um eine zuverlässige Versiegelung der RFID-Funktionalität, insbesondere gegen Feuchtigkeit und Korrosion, einzurichten. Korrosion aufgrund von zu hoher Feuchtigkeit tritt zum Beispiel im Bereich eines RFID-Chips auf, welcher in der Regel ein Metall beziehungsweise metallische Kontakte umfasst. Auch eine Antennenstruktur eines RFID-Transponders, welche zum Beispiel durch Silber, Aluminium- oder Kupferleiterbahnen gebildet ist, kann durch Korrosion wesentliche Funktionseinbußen erfahren. Mittels des beschriebenen Kennzeichnungsetiketts ist zum Beispiel ein elastisches Klebetikett realisierbar, das aufgrund des stoffschlüssigen Einschlusses des RFID-Chips und/oder der RFID-Antennenstruktur zuverlässig einem Feuchtigkeitseintrag entgegenwirkt und Korrosion verhindert oder zumindest ein Risiko einer Korrosion signifikant reduziert. Es ist daher nicht erforderlich, die RFID-Funktionalität aufwendig und kostspielig zu schützen, zum Beispiel indem diese komplett umspritzt wird und dadurch aber auch nicht mehr so flexibel und vielseitig einsetzbar ist, wie ein elastisches Klebeetikett.

Gemäß einer weiteren Weiterbildung des Kennzeichnungsetiketts ist die Versiegelungsschicht mittels einer Klebeschicht mit dem Untergrund verbunden, sodass die Klebeschicht zumindest abschnittsweise innerhalb der Schweißnaht von dieser umgeben und zwischen der Versiegelungsschicht und dem Untergrund eingeschlossen ist. Somit kann auch die Klebeschicht vor Feuchtigkeitseinwirkungen geschützt werden und trägt zu einem zuverlässigen Halt oder Zusammenhalt der Komponenten des Kennzeichnungsetiketts bei. Zum Beispiel ist die Klebeschicht lokal an einer Unterseite der Versiegelungsschicht aufgetragen, die dem RFID-Transponder und dem Untergrund zugewandt ist. Eine solche Klebeschicht kann abschnittsweise vorgesehen sein oder einen in sich geschlossen Ring oder Rahmen ausbilden. Vorzugsweise ist die Klebeschicht vollflächig an der Unterseite der Versiegelungsschicht ausgebildet, wobei die Schweißnaht beim Ausbilden die Klebeschicht in dem stoffschlüssigen Verbundbereich nach innen oder außen verdrängt. Die Klebeschicht kann daher auch in dem Bereich vorhanden sein, in dem die Schweißnaht und die stoffschlüssige Verbindung ausgebildet werden. Alternativ oder zusätzlich kann die Klebeschicht oder eine weitere Klebeschicht außerhalb des Bereichs der Schweißnaht angeordnet sein, um die Versiegelungsschicht zunächst mit seinen klebenden Randbereichen mit dem Untergrund zu verbinden und anschließend innerhalb des klebenden Bereichs die Schweißnaht auszubilden.

Bevorzugt ist die Klebeschicht so vorgesehen, dass sie in einem Bereich der Fügezone, in der die Schweißnaht ausgebildet wird, vollständig oder größtenteils ausgespart ist. Die Fügezone kann demgemäß klebefrei eingerichtet sein und ein zuverlässiges Verschweißen der Versiegelungsschicht mit dem Untergrund ermöglichen. Die Klebeschicht kann lediglich im inneren Bereich der RFID-Antennenstruktur ausgebildet sein und von der Schweißnaht umschlossen werden. Alternativ oder zusätzlich kann die Klebeschicht oder eine weitere Klebeschicht in einem äußeren Randbereich benachbart zu der Schweißnaht angeordnet sein. Das Kennzeichnungsetikett kann demnach zwei oder mehr Klebeabschnitte aufweisen, die durch einen gezielt ausgebildeten klebefreien Bereich separiert sind. Der von Klebstoff ausgesparte Bereich ist zum Ausbilden der Schweißnaht vorgesehen und insbesondere einer Form der RFID-Antennenstruktur angepasst. Zum Beispiel sind die RFID-Antennenstruktur und der klebefreie Bereich rechteckig, quadratisch oder kreisförmig ausgebildet. Alternativ können auch andere geometrische Formen ausgebildet sein.

Gemäß einer weiteren Weiterbildung des Kennzeichnungsetiketts verläuft die Schweißnaht entlang eines Etikettenrands des Kennzeichnungsetiketts und ist in sich geschlossen. Die Schweißnaht bildet zum Beispiel einen Ring oder Rahmen um den RFID-Transponder oder zumindest um den RFID-Chip oder die RFID-Antennenstruktur. Zum Beispiel kann es nutzbringend sein, den RFID-Chip als sensibles elektronisches Halbleiterbauteil mittels des Kennzeichnungsetiketts zuverlässig zu versiegeln, sodass auch verschiedene Antennenstrukturen mit dem eingeschweißten RFID-Chip koppelbar sind. Der RFID-Chip weist häufig einen ähnlichen Aufbau auf, während die Antennenstruktur je nach Anwendung und Funktionsvorgaben unterschiedliche Geometrien und Strukturverläufe aufweisen kann. Die Schweißnaht erstreckt sich dann über einen Abschnitt der Antennenstruktur, die mit dem RFID-Chip verbunden ist. Aber auch an einer solchen Überlappungsstelle ist die Schweißnaht zuverlässig ausgebildet und stoffschlüssig mit der Antennenstruktur verbunden, die zum Beispiel aus Silber, Aluminium oder Kupfer besteht oder Silber, Aluminium oder Kupfer aufweist.

Dem Kennzeichnungsetikett kann eine Stapelrichtung und eine Haupterstreckungsebene zugeordnet werden, wobei die Stapelrichtung im Wesentlichen eine senkrechte Orientierung zu der Haupterstreckungsebene bildet. Das Kennzeichnungsetikett ist, insbesondere, wie die meisten Etiketten, flächig ausgebildet, sodass eine Etikettenbreite und eine Etikettenlänge deutlich über eine Etikettendicke überwiegen. Die Etikettenbreite und die Etikettenlänge spannen dann die Haupterstreckungsebene auf, während die Etikettendicke der Stapelrichtung folgt. Entlang der Stapelrichtung ist dann zum Beispiel eine Oberschicht vorgesehen, gefolgt von dem RFID-Transponder mit oder ohne eigene Trägerschicht, gefolgt von der Unterschicht oder dem Untergrund.

Die Schweißnaht ist bezogen auf die Haupterstreckungsebene bevorzugt mit einem vorgegebenen Strukturverlauf und mit einer vorgegebenen Breite ausgebildet, die zum Beispiel einen Wert von einschließlich 0,2 mm bis einschließlich 10 mm aufweist. Eine solche Schweißnaht ist insbesondere mittels Ultraschallschweißen einfach und zuverlässig ausbildbar. Alternativ kann die Schweißnaht auch mittels Laserschweißen ausgebildet werden und gegebenenfalls noch dünner beziehungsweise schmaler ausgeführt werden und eine Breite von 0,1 mm aufweisen. Aber auch breitere Schweißnähte sind mittels Schweißen oder Siegeln ausbildbar, sodass die Schweißnaht des Kennzeichnungsetiketts breiter als 10 mm realisiert sein kann. Eine vorgegeben breite Schweißnaht bildet eine entsprechende Eigensteifigkeit der Schweißverbindung aus und kann zu einer verbesserten Steifigkeit des Kennzeichnungsetiketts beitragen und einem unerwünschten Faltenwurf des Kennzeichnungsetiketts entgegenwirken. Auch eine Höhe oder Dicke der Schweißnaht kann in Abstimmung auf die einzuschließende RFID-Funktionalität vorgegeben ausgebildet werden.

Das Kennzeichnungsetikett kann ferner dahingehend weitergebildet sein, dass die Schweißnaht bezogen auf die Haupterstreckungsebene einen vorgegebenen 2D-Strukturverlauf beispielsweise mit einer Wellenstruktur, einer Zickzackstruktur und/oder einer Waffelstruktur aufweist. Auf diese Weise kann auch eine effektive Verbreiterung der Schweißnaht eingerichtet werden, welche die Eigensteifigkeit und Festigkeit der Schweißverbindung im Vergleich zu einer schmalen geraden Schweißnaht erhöht und zu einer verbesserten Steifigkeit des Kennzeichnungsetiketts beitragen und einem unerwünschten Faltenwurf des Kennzeichnungsetiketts entgegenwirken kann. Die beschriebenen Möglichkeiten zur Auslegung eines 2D-Strukturverlaufs tragen zur Stabilität des Verbundes des Kennzeichnungsetiketts bei, um zum Beispiel eine spätere verzugsfreie Applikation des Kennzeichnungsetiketts auf oder an einem Gegenstand sicherzustellen. Die Schweißnaht kann jeweils abschnittsweise ausgebildet werden oder in einem Arbeitsgang durchgehend in sich verschlossen werden.

Die Schweißnaht kann lokal oder umlaufend um den RFID-Chip und/oder die Antennenstruktur ausgebildet sein, sodass dieser und/oder diese zuverlässig versiegelt sind. Eine solche stoffschlüssige Versiegelung muss nicht zwingend in sich selbst schließen, sondern kann auch mit einem oder mehreren Hilfselementen und/oder angrenzenden Strukturen des Kennzeichnungsetiketts und/oder des Untergrunds zusammenwirken. Zumindest trägt die stoffschlüssige Verbindung mittels der ausgebildeten Schweißnaht zwischen der Versiegelungsschicht und dem Untergrund zu einem zuverlässigen Einschluss des RFID-Transponders beziehungsweise des RFID-Chips und/oder der Antennenstruktur bei.

Gemäß einer weiteren Weiterbildung des Kennzeichnungsetiketts sind die Versiegelungsschicht und/oder der Untergrund vorgebogen mittels der Schweißnaht stoffschlüssig miteinander verbunden, sodass das Kennzeichnungsetikett ein vorgegeben gekrümmtes Kennzeichnungsmedium ausbildet. Demgemäß kann die Schweißnaht mit einem vorgegebenen 3D-Strukturverlauf ausgebildet werden, sodass das Kennzeichnungsetikett hinsichtlich seiner Form auf eine äußere Form des zu kennzeichnenden Gegenstands angepasst wird. Eine solche Adaption wirkt sich nutzbringend auf ein einfaches Applizieren und einen zuverlässigen Halt des Kennzeichnungsetiketts aus, da im Vergleich zu einem ebenen Etikett, welches an eine gekrümmte Oberfläche aufgebracht werden soll, Rückstellkräfte reduziert sind, die das Kennzeichnungsetikett in eine ebene Lage drängen würden. Zum Beispiel wird das Kennzeichnungsetikett mittels einer Sonotrode und einem Widerlager in Form eines Ambosses mittels Ultraschallschweißen ausgebildet und ist für den Einsatz an zylindrischen Gefäßen, wie zum Beispiel einer Spritze vorgesehen, die einen zylindrischen Spritzenkörper aufweist. Besonders bevorzugt hat dann der Amboss eine Kontaktfläche mit der Sonotrode, die eine Krümmung aufweist, welche der umlaufenden Krümmung des Spitzenkörpers entspricht.

Das Kennzeichnungsetikett kann ferner ein Folienelement aufweisen, das mit dem RFID-Transponder und/oder mit der Versiegelungsschicht und/oder mit dem Untergrund gekoppelt ist und das dazu eingerichtet ist, einer Feuchtigkeitsaufnahme in den eingeschlossenen Bereich mit dem RFID-Chip und/oder der Antennenstruktur entgegenzuwirken. Zum Beispiel kann die Versiegelungsschicht mit einem Folienmaterial mit speziellen Eigenschaften kombiniert werden, welches ein Obermaterial, eine Zwischenlage und/oder ein Inlaysubstrat ausbildet und eine zusätzliche Barrierewirkung z. B. gegenüber Sauerstoff und/oder Wasserdampf sowie auch gegen korrosive Gase und/oder Flüssigkeiten einrichtet oder einer Sauerstoff- und/oder Feuchtigkeitsaufnahme beziehungsweise Aufnahme korrosiver Gase und/oder Flüssigkeiten in den Bereich des RFID-Transponders entgegenwirkt.

Gemäß einer weiteren Weiterbildung weist das Kennzeichnungsetikett ein Funktionselement auf, das mit dem RFID-Transponder und/oder mit der Versiegelungsschicht und/oder mit dem Untergrund verbunden oder daran angebracht oder daran angelegt ist und das dazu eingerichtet ist, einen mechanischen Schutz für den RFID-Chip und/oder die Antennenstruktur auszubilden. Zum Beispiel kann eine zusätzliche Einbringung einer Vliesschicht für mechanischen Schutz des RFID-Transponders sorgen. Alternativ oder zusätzlich kann ein Schaumelement und/oder ein gummielastisches Folienelement vorgesehen sein, das als eine obere und/oder untere Deckschicht für den RFID-Transponder fungiert und einen Sandwich-Aufbau des Kennzeichnungsetiketts mitbegründet.

Das Funktionselement und/oder das zuvor beschriebene Folienelement können innerhalb und/oder außerhalb der Schweißnaht angeordnet sein und gegebenenfalls auch mit der Versiegelungsschicht mit verschweißt werden. Innen beziehungsweise im Bereich des RFID-Transponders kann somit ein zuverlässiger mechanischer, physikalischer und/oder chemischer Schutz eingerichtet werden. Außen beziehungsweise auf der dem RFID-Transponder gegenüberliegenden Seite der Schweißnaht kann das Funktionselement und/oder das Folienelement als Abstandhalter fungieren, um eine vorgegebene Höhe des Kennzeichnungsetiketts auszubilden. Alternativ oder zusätzlich kann auch innenliegend eine Abstandsvorgabe realisiert sein, indem zum Beispiel Lackpunkte um den RFID-Chip herum angeordnet und auf der Trägerschicht aufgedruckt sind. Ferner kann eine Ferritfolie als Funktionselement in dem Kennzeichnungsetikett vorgesehen sein, welche zu einer verbesserten RFID-Funktionalität des RFID-Transponders sogar auf einem metallischen Untergrund beitragen kann.

Mittels der Verarbeitung des Kennzeichnungsetiketts mit Folien und/oder Funktionsschichten können gewünschte Barriereeigenschaften und Sicherheitsmerkmale eingerichtet werden. Ferner kann eine Verarbeitung von gummierten und ungummierten Folien zur Fixierung oder Weiterverarbeitung des Kennzeichnungsetiketts in den Etikettenaufbau mit einbezogen werden. Das Funktionselement kann zum Beispiel auch in Form einer Void-Schicht ausgebildet sein oder eine solche umfassen. Die Void-Schicht stellt einen Void-Effekt bereit, der einen Manipulationsschutz bietet. Zum Beispiel ist die Void-Schicht mit zwei oder mehreren unterschiedlich stark klebenden Strukturen oder Releaseabstufungen realisiert. Beispielsweise ist eine stärker klebende Struktur in Form eines Schriftzugs in der Void-Struktur implementiert, während andere Abschnitte der Void-Struktur schwächer klebend sind. Wird die Void-Struktur beziehungsweise das Kennzeichnungsetikett mit einer Void-Schicht auf einem zu kennzeichnenden Gegenstand aufgebracht, bleibt bei einem Ablösen des Kennzeichnungsetiketts zum Beispiel der stärker klebende Schriftzug an dem Gegenstand kleben, während die schwächer klebenden Abschnitte mit dem Kennzeichnungsetikett oder einem von dem Gegenstand abgelösten Etikettenabschnitt entfernt werden. Alternativ können die beschriebenen Strukturen auch umgekehrt hinsichtlich ihrer Klebestärke ausgebildet sein, sodass zum Beispiel die Struktur in Form eines Schriftzugs schwächer klebend ist.

Alternativ oder zusätzlich können Sicherheitsmerkmale in Form von Stanzungen vorgesehen sein, die eine vorgegebene Schwächungsstruktur einer Etikettenschicht des Kennzeichnungsetiketts einrichten. Somit können zum Beispiel Einreißpositionen bereitgestellt werden, an denen das Kennzeichnungsetikett bei einem Manipulationsversuch vorgegeben einreißt. Alternativ oder zusätzlich können auch Perforationen in einer oder mehreren Schichten des Kennzeichnungsetiketts vorgesehen sein, die ein gezieltes Durch- oder Auftrennen der jeweiligen Schicht ermöglichen.

Gemäß einer weiteren Weiterbildung des Kennzeichnungsetiketts ist die Versiegelungsschicht und/oder der Untergrund als transparentes Folienelement ausgebildet. Mittels einer transparenten Folie kann der RFID-Transponder in dem eingeschlossenen Etikettenaufbau sichtbar gemacht und eine optische Überprüfung ermöglicht werden. Alternativ oder zusätzlich können auch farbige und/oder nicht transparente Folienelemente vorgesehen werden, um den RFID-Transponder und das Innenleben des Kennzeichnungsetiketts zu verbergen.

Gemäß einem weiteren Aspekt der Erfindung umfasst ein Kennzeichnungssystem eine Ausgestaltung des zuvor beschriebenen Kennzeichnungsetiketts, das an einem Gegenstand befestigt ist. Insbesondere kann eine Oberfläche des Gegenstands den Untergrund des Kennzeichnungsetiketts ausbilden, mit dem die Versiegelungsschicht mittels der Schweißnaht stoffschlüssig verbunden ist. Die Oberfläche des Gegenstands kann zum Beispiel durch eine Außenfläche eines Behälters bereitgestellt sein, welcher aus verschweißbarem, schmelzbarem und/oder fügbarem Material ausgebildet ist. Alternativ kann ein Element, wie eine Folie oder ein Etikett, das an einer Oberfläche des Gegenstands angeordnet ist, einen verschweißbaren Untergrund für die Versiegelungsschicht ausbilden.

Dadurch, dass das Kennzeichnungssystem eine Ausgestaltung des beschriebenen Kennzeichnungsetiketts umfasst, sind beschriebene Eigenschaften und Merkmale des Kennzeichnungsetiketts auch für das Kennzeichnungssystem offenbart und umgekehrt.

Gemäß einem weiteren Aspekt der Erfindung umfasst ein Verfahren zum Herstellen eines Kennzeichnungsetiketts ein Bereitstellen eines RFID-Transponders mit einem RFID-Chip und einer Antennenstruktur, die signaltechnisch miteinander gekoppelt sind, und ein Bereitstellen einer Versiegelungsschicht. Das Verfahren umfasst weiter ein Anbringen des RFID-Transponders und der Versiegelungsschicht an einem Untergrund, sodass der RFID-Chip und/oder die Antennenstruktur zwischen der Versiegelungsschicht und dem Untergrund angeordnet ist. Das Anbringen des RFID-Transponders und der Versiegelungsschicht kann zeitgleich in einem Schritt erfolgen oder zeitlich separiert voneinander. Das Verfahren umfasst außerdem ein Ausbilden einer Schweißnaht mittels Schweißen der Versiegelungsschicht, sodass der RFID-Chip und/oder die Antennenstruktur von der Schweißnaht umgeben und zwischen der Versiegelungsschicht und dem Untergrund eingeschlossen ist.

Das Ausbilden der Schweißnaht kann insbesondere mittels Ultraschallschweißen kostengünstig und zeitsparend erfolgen. Dabei können eine Sonotrode und ein Amboss als Schweißwerkzeuge eingesetzt werden, und ein torsionales und/oder longitudinales Ultraschallschweißen durchgeführt werden. Durch Bewegungen und Vibrieren der Sonotrode kann das Material der Versiegelungsschicht im Zusammenwirken mit dem Amboss als Widerlager aufgeschmolzen werden. Der Amboss und die Sonotrode sind dabei auf gegenüberliegenden Seiten der zu verschweißenden Schichten angeordnet. Dabei kann der Amboss ein separates Werkzeug sein oder den Gegenstand selbst, wie zum Beispiel eine Spritze, realisieren. Bei einem longitudinalen Ultraschallschweißen fungiert die Sonotrode wie ein Hammer, der auf die zu schweißende Versiegelungsschicht und den Untergrund einhämmert. Bei einem torsionalen Ultraschallschweißen reibt die Sonotrode entlang einer vorgegebenen Bahn, um die Schweißnaht auszubilden. Alternativ oder zusätzlich kann die Schweißnaht mittels thermischen Schweißen und/oder Siegeln und/oder Laserschweißen ausgebildet werden. Siegeln kann Heißsiegeln und Kaltsiegeln umfassen.

Gemäß einer Weiterbildung des Verfahrens wird die Schweißnaht mittels einer Sonotrode und eines Amboss durchgeführt wird, die betriebsgemäß einander zugewandt komplementäre Krümmungsoberflächen aufweisen, sodass die Schweißnaht bezogen auf die Stapelrichtung des Kennzeichnungsetiketts vorgegeben gekrümmt ausgebildet wird. Dadurch wird das Kennzeichnungsetikett in Bezug auf seine Haupterstreckungsebene mit einer vorgegebenen Krümmung ausgebildet. Die Form oder Arbeitsflächen der Sonotrode und des Amboss werden vorzugsweise so gewählt, dass sie einer Außenform des Gegenstands entsprechen, an den das Kennzeichnungsetikett angebracht werden soll.

Ferner kann das Verfahren ein Durchführen eines Stanzvorgangs und/oder eines Schneidvorgangs und Ausbilden einer Außenkontur des Kennzeichnungsetiketts umfassen. Das Kennzeichnungsetikett wird vorzugsweise in einer Vielzahl auf einer fortlaufenden Materialbahn ausgebildet und als Etikettenrolle verarbeitet. Der Stanzvorgang und/oder Schneidvorgang kann insbesondere zeitgleich mit dem Schweißen der Versiegelungsschicht in einem gemeinsamen Arbeitsschritt durchgeführt werden.

Gemäß einer weiteren Weiterbildung umfasst das Verfahren ein Bereitstellen des Untergrunds, mit dem die Versiegelungsschicht verschweißt wird, in Form einer Trägerschicht des RFID-Transponders und/oder in Form einer Unterschicht und/oder in Form einer Oberfläche eines Gegenstands, der mit dem Kennzeichnungsetikett gekennzeichnet wird. Es können auch mehrere Schweißnähte auf die beschriebenen Weisen ausgebildet werden, sodass zum Beispiel eine Oberschicht als Versiegelungsschicht mit der Trägerschicht des RFID-Transponders und mit einer Unterschicht verschweißt wird, die den Untergrund bildet. Somit kann eine besonders zuverlässige und sichere Verkapselung des RFID-Transponders in dem Kennzeichnungsetikett eingerichtet werden.

Dadurch, dass das jeweilige Verfahren insbesondere zum Anfertigen einer Ausgestaltung des zuvor beschriebenen Kennzeichnungsetiketts eingerichtet ist, sind Eigenschaften und Merkmale des Kennzeichnungsetiketts auch für das Herstellungsverfahren offenbart und umgekehrt.

Eine Verarbeitung einer Vielzahl von Kennzeichnungsetiketten kann insbesondere in einem quasistatischen, getaktetem Rolle-zu-Rolle-Prozess mit einem Vor- und Nachlauf durchgeführt werden. Dabei können auch mehrere Sonotroden vorgesehen sein, welche zum Beispiel in Reihen getaktet sind, um mehrere Schweißvorgänge gleichzeitig durchzuführen. Die Verarbeitung eines Rolle-zu-Rolle-Prozesses kann somit mit einer Dynamikänderung der Bandgeschwindigkeit und einer permanenten Schwingungseinleitung über die Sonotroden durchgeführt werden. Alternativ kann der Rolle-zu-Rolle-Prozess auch kontinuierlich ohne Dynamikänderung erfolgen, wenn zum Beispiel die Sonotrode und/oder der Amboss als Rollensonotrode oder Rollenamboss ausgebildet ist.

Eine Verarbeitung kann auch in einem Stückgutprozess zur festen Applikation auf Einzelbauteilen erfolgen. Eine Verarbeitung des Inlays beziehungsweise des RFID-Transponders kann auch zum Ausbilden eines losen Stückguts und zur losen Einlage in ein Behältnis, zum Beispiel für ein Tracking eines Gesamtbestandes auf einer Palette, eingerichtet sein.

Eine Verarbeitungsfrequenz kann im Bereich von 20kHz - 100kHz erfolgen und insbesondere kann eine Kombination des Schweißprozesses mit einem Stanzprozesses in einem Arbeitsschritt eingerichtet sein. Vorgelagert oder nachgelagert kann ein Vereinzelungsprozess erfolgen, indem ein Schneidvorgang mittels eines Lasers, eines Ultraschallmessers, eines Schneidmessers, eines Rollmessers und/oder einer Stanzkontur oder eines Stanzstempels durchgeführt wird.

Ferner kann eine Positionierung des Schweißgutes, also der Versiegelungsschicht relativ zu dem RFID-Transponder und/oder relativ zu dem Untergrund, über eine bahnförmige Zuführung des jeweiligen Bahnmaterials vorgesehen sein. Auch eine Einzelapplikation an definierten Stellen kann eingerichtet werden. Im Zusammenhang mit Ultraschallschweißen kann eine Positionierung des RFID-Transponders und der Versiegelungsschicht direkt an der Sonotrode durch Fixierung des Schweißgutes über einen Unterdruck an der Sonotrode und/oder an dem Amboss eingerichtet werden. Alternativ oder zusätzlich kann eine lokale oder vollflächige Fixierung des Schweißguts auf dem Untergrund durch eine Gummierung auf einer Unterseite des RFID-Transponders und/oder der Oberschicht und/oder der Unterschicht ermöglicht werden.

Mittels der beschriebenen Herstellungsmöglichkeiten kann eine RFID-Inlayfolie vor eindringender Feuchtigkeit und damit einhergehender Korrosion zuverlässig geschützt werden, indem es zum Beispiel mit einer Oberfolie oder zwischen zwei Folien stoffschlüssig verschweißt wird. Alternativ kann der RFID-Transponder mit einer Trägerschicht unmittelbar auf ein Bauteil durch Verschweißen fixiert werden.

Im Folgenden sind Ausführungsbeispiele der Erfindung anhand schematischer Zeichnungen erläutert. Es zeigen:
- Figuren 1-4: verschiedene Ausführungsbeispiele eines Kennzeichnungsetiketts in jeweiligen Seitenansichten,
- Figur 5: ein Ausführungsbeispiel eines Verfahrensschritts zum Ausbilden eines Kennzeichnungsetiketts nach den Figuren 1-4,
- Figuren 6-7: Ausführungsbeispiele eines Kennzeichnungsetiketts in einer jeweiligen Aufsicht,
- Figuren 8-10: verschiedene Ausführungsbeispiele einer Schweißnaht des Kennzeichnungsetiketts in jeweiligen Aufsichten, und
- Figur 11: ein Ablaufdiagramm für ein Verfahren zum Herstellen eines Kennzeichnungsetiketts nach den Figuren 1-9.

Elemente oder Merkmale gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente oder Merkmale in sämtlichen Figuren mit zugehörigen Bezugszeichen gekennzeichnet.

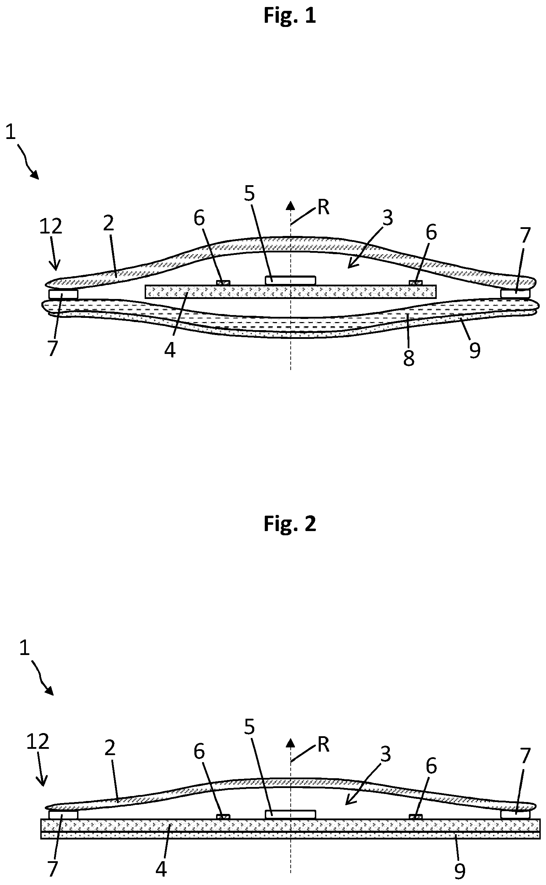

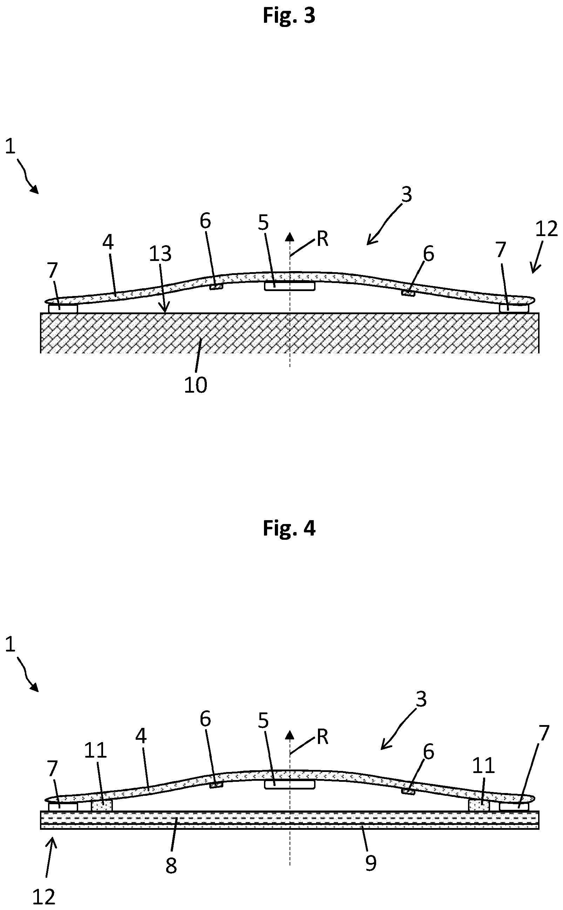

Die Figuren 1-4 zeigen jeweils in einer schematischen Seitenansicht verschiedene Ausführungsbeispiele eines elektronischen Kennzeichnungsetiketts 1. Das Kennzeichnungsetikett 1 weist jeweils einen RFID-Transponder 3 mit einem RFID-Chip 5 und einer Antennenstruktur 6 auf, die signaltechnisch miteinander gekoppelt sind. Darüber hinaus umfasst das Kennzeichnungsetikett 1 eine Versiegelungsschicht, die als eine separate Oberschicht 2 (s. Figuren 1, 2 und 5) oder als eine Trägerschicht 4 des RFID-Transponders 3 realisiert ist (s. Figuren 3 und 4). Die Versiegelungsschicht bedeckt den RFID-Transponder 3 und ist mittels Schweißen stoffschlüssig mit einem Untergrund verbunden, sodass der RFID-Chip 5 und/oder die Antennenstruktur 6 von einer Schweißnaht 7 umgeben und zwischen der Versiegelungsschicht und dem Untergrund eingeschlossen ist. Der Untergrund ist als eine separate Unterschicht 8 (s. Figuren 1 und 4), als eine Oberfläche 13 eines Gegenstands 10 (s. Figur 3) oder als die Trägerschicht 4 des RFID-Transponders 3 realisiert (s. Figuren 2, 5 und 6).

Mittels des Kennzeichnungsetiketts 1 ist auf einfache und kostengünstige Weise ein sicheres und zuverlässiges elektronisches Kennzeichnen eines Gegenstands 10 einrichtbar. Das Kennzeichnungsetikett 1 ist aufgrund der verschließenden Schweißnaht 7 gegen unerwünschte Einwirkungen von außen, beispielsweise in Form von Feuchtigkeit, zuverlässig geschützt. Das Kennzeichnungsetikett 1 ist zum Beispiel als versiegeltes RFID-Etikett mit einem verschweißten Rand 12 ausgebildet und kann insbesondere im medizinischen oder pharmazeutischen Bereich eingesetzt werden, um Spritzen oder Gefäße zu kennzeichnen, die mittels Sterilisierungsvorgängen, wie Autoklavieren, behandelt werden. Aufgrund des beschriebenen Aufbaus des Kennzeichnungsetiketts 1 wird dann einem Eindringen von Dampf oder Flüssigkeit in den Bereich des RFID-Transponders 3 zuverlässig entgegengewirkt, sodass das Kennzeichnungsetikett 1 ohne Beeinträchtigung seiner Funktionalität an dem Gegenstand 10 verbleibt.

Das Kennzeichnungsetikett 1 gemäß Figur 1 weist die Unterschicht 8 als Untergrund auf, welche eine untere Deckschicht oder Auflage für den RFID-Transponder 3 und/oder die Oberschicht 2 ausbildet. Die Oberschicht 2 realisiert in diesem Ausführungsbeispiel die Versiegelungsschicht. An einem Etikettenrand 12 des Kennzeichnungsetiketts 1 sind die Oberschicht 2 und die Unterschicht 8 mittels der Schweißnaht 7 stoffschlüssig miteinander verbunden, sodass der RFID-Transponder 3, welcher gemäß Figur 1 den RFID-Chip 5, die Antennenstruktur 6 und die Trägerschicht 4 umfasst, in einer Art Etikettentasche eingeschweißt ist. Vorzugsweise ist der RFID-Transponder 3 mit der Oberschicht 2 und/oder der Unterschicht 8 gekoppelt und hinsichtlich seiner Position fixiert. Alternativ kann der RFID-Transponder 3 mit der Trägerschicht 4 auch ohne Kopplung mit der Oberschicht 2 und/oder der Unterschicht 8 frei beweglich, sozusagen frei schwimmend, in der Etikettentasche vorliegen. Ferner weist das Kennzeichnungsetikett 1 eine Klebeschicht 9 auf, die an einer Unterseite oder Außenseite der Unterschicht 8 angeordnet ist und ein einfaches und zuverlässiges Applizieren des Kennzeichnungsetiketts 1 an einem Gegenstand ermöglicht.

In dieser Beschreibung beziehen sich Begriffe, wie "oben", "unten", "Oberschicht", "Unterschicht" und "Untergrund" auf eine Ausrichtung und Orientierung der Komponenten des Kennzeichnungsetiketts 1, wie sie in den Figuren illustriert ist. Ferner ist eine Stapelrichtung R des Kennzeichnungsetiketts 1 angegeben, welche in den Figuren einer Vertikalen entspricht. In Applikation an einem Gegenstand entspricht die Stapelrichtung R in der Regel einer Oberflächennormalen der Gegenstandsoberfläche, an der das Kennzeichnungsetikett 1 angebracht ist. Die Unterschicht 8 ist demgemäß dem Gegenstand zugewandt, während die Versiegelungsschicht 2, 4 oben aufliegt und dem Gegenstand abgewandt ist.

Die Schweißnaht 7 bildet einen stoffschlüssigen Verbund zwischen der Oberschicht 2 und der Unterschicht 8 aus und realisiert eine Siegelfläche, innerhalb derer der RFID-Transponder 3 angeordnet ist. Der RFID-Transponder 3 bildet ein Inlay, das vollständig eingeschlossen oder umschlossen ist.

Die Figur 2 zeigt ein weiteres Ausführungsbeispiel des Kennzeichnungsetiketts 1, bei dem die Trägerschicht 4 des RFID-Transponders 3 den verschweißbaren Untergrund für die Oberschicht 2 ausbildet. Die Oberschicht 2 ist mit dem Inlaysubstrat des RFID-Transponders 3 selbst verschweißt. Somit kann das Kennzeichnungsetikett 1 besonders flach realisiert werden. Besonders bevorzugt sind die Oberschicht 2 und die Trägerschicht 4, wie auch die Unterschicht 8 gemäß Figur 1, als dünnes flexibles Folienelement ausgebildet, die vorzugsweise auch aus dem gleichen Material ausgebildet sind. Auf diese Weise kann eine zuverlässige Schweißverbindung eingerichtet und ein flexibles und besonders flaches Kennzeichnungsetikett ausgestaltet werden.

In Figur 3 ist ein weiteres Ausführungsbeispiel des Kennzeichnungsetiketts 1 dargestellt, bei dem der Untergrund durch die Oberfläche 13 des Gegenstands 10 selbst bereitgestellt ist. Die Oberfläche 13 stellt zum Beispiel als Außenfläche einer Kunststoffspritze einen massiven Untergrund bereit, der mit der Versiegelungsschicht 2, 4 verschweißbar ist. Zum Beispiel ist die Versiegelungsschicht, wie in Figur 3 dargestellt, durch die Trägerschicht 4 des RFID-Transponders 3 realisiert, die mittels Schweißen an einer vorgegebenen Position an einer Mantelfläche der Kunststoffspritze befestigt wird und dadurch das Kennzeichnungsetikett 1 ausbildet. Alternativ kann der Gegenstand 10 auch eine Medikamentenverpackung oder Etikett realisieren, welches an einem Injektionsfläschchen oder einem Vial angebracht ist. Jeweils ist die Oberfläche 13 als Untergrund dazu eingerichtet, mit der Versiegelungsschicht 2, 4 verschweißt werden zu können.

In Figur 4 ist ein weiteres Ausführungsbeispiel des Kennzeichnungsetiketts 1 illustriert, bei dem angedeutet ist, dass die Versiegelungsschicht 2, 4 ferner auch mittels einer Klebeschicht 11 mit dem Untergrund 4, 8, 13 verbunden sein kann. Die Klebeschicht 11 ist vorzugsweise innerhalb der Schweißnaht 7 angeordnet, sodass auch sie von chemischen und/oder physikalischen Einflüssen von außen geschützt ist. Die Klebeschicht 11 kann insbesondere dazu dienen, eine Positionierung der Versiegelungsschicht 2, 4 einzurichten, bevor diese mit dem Untergrund 4, 8, 13 mittels Schweißen stoffschlüssig verbunden wird.

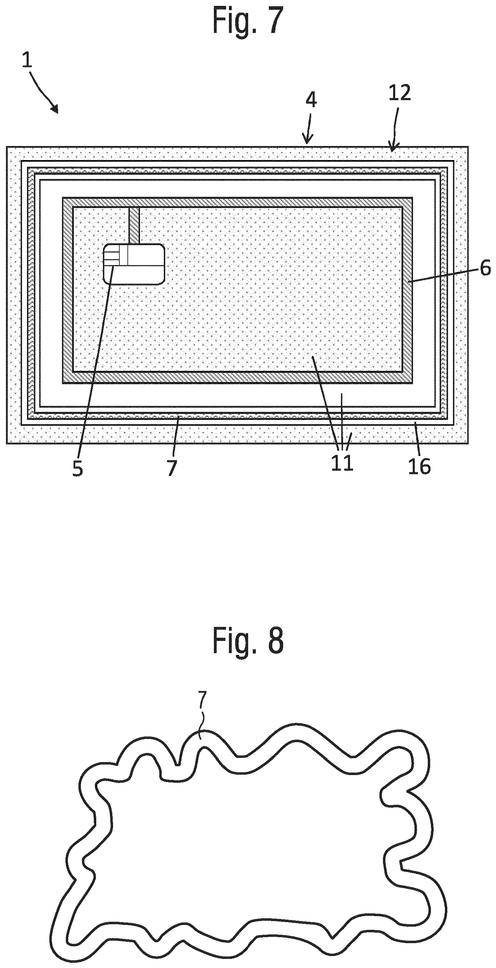

Alternativ oder zusätzlich kann die Klebeschicht 11 oder eine weitere Klebeschicht außerhalb des Bereichs der Schweißnaht 7 angeordnet sein (s.a. Figur 7), um die Versiegelungsschicht 2, 4 mit seinen klebenden Randbereichen mit dem Untergrund 4, 8, 13 zu verbinden und anschließend innerhalb des klebenden Bereichs die Schweißnaht 7 auszubilden. Die Klebeschicht 11 ist in Figur 4 beispielhaft dargestellt und kann auch in den anderen Ausführungsformen vorgesehen sein. Insbesondere kann die Klebeschicht 11 auch vollflächig an einer Unterseite der Versiegelungsschicht 2, 4 ausgebildet sein und der Fixierung des Inlays dienen.

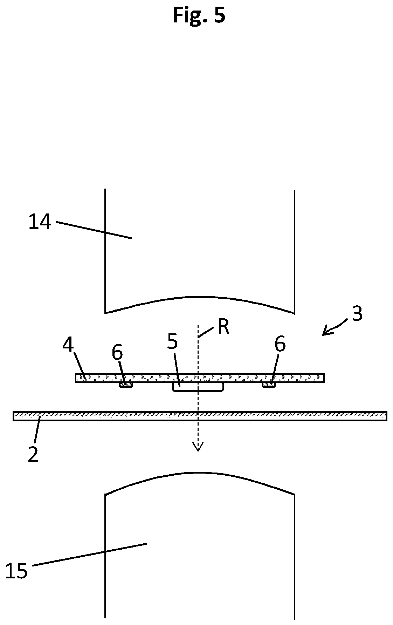

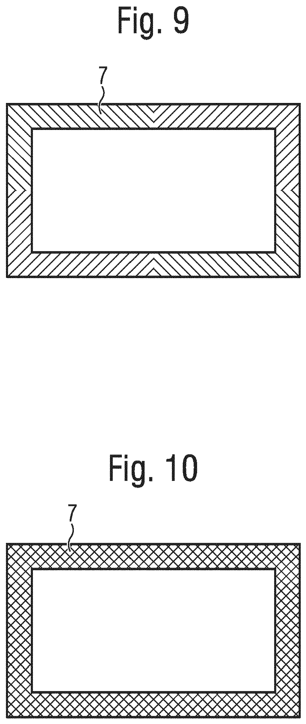

Figur 5 zeigt in einer schematischen Darstellung, wie das Kennzeichnungsetikett 1 durch Ultraschallschweißen mittels einer Sonotrode 14 und eines Amboss 15 ausgebildet werden kann. In diesem Zusammenhang wird insbesondere auf die nachfolgende Beschreibung zu der Figur 10 verwiesen.

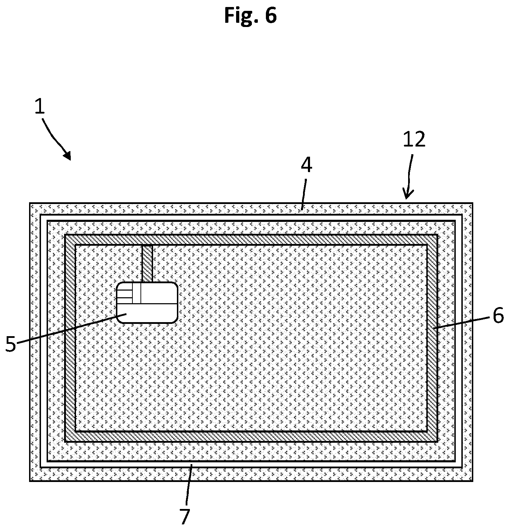

Figur 6 zeigt das Kennzeichnungsetikett 1 in einer schematischen Aufsicht. Anhand der Figur 6 ist aufgezeigt, dass die Antennenstruktur 6 in Form von Leiterbahnen ausgebildet und mit dem RFID-Chip 5 verbunden ist. Beispielweise ist die Antennenstruktur 6 in Form von Kupfer-, Silber- oder Aluminiumbahnen auf die Trägerschicht 4 aufgedruckt. Auch der RFID-Chip 5 kann mittels eines Druckprozesses auf der Trägerschicht 4 aufgebracht sein. Sowohl die Antennenstruktur 6 als auch der RFID-Chip 5 sind von der Schweißnaht 7 umgeben und durch diese seitlich eingeschlossen und insbesondere gegen Feuchtigkeitseintrag geschützt. Alternativ kann auch nur der RFID-Chip 5 von der Schweißnaht 7 umgeben sein. Alternativ kann auch eine weitere Schweißnaht ausgebildet sein, sodass das Kennzeichnungsetikett 1 zumindest eine Schweißnaht 7 aufweist. Zum Beispiel kann der RFID-Chip 5 von einer Schweißnaht 7 umgeben sein und zusätzlich von einer weiteren Schweißnaht 7, die auch die Antennenstruktur 6 einschließt. Entsprechend kann eine besonders zuverlässige und sichere Barriere gegen einen Feuchtigkeitseintritt in den Bereich der Antennenstruktur 6 und/oder des RFID-Chips 5 eingerichtet werden. Die Schweißnaht 7 kann ferner auch so ausgebildet sein, dass sie auf der Antennenstruktur 6 liegt beziehungsweise die Antennenstruktur 6 kreuzt.

Figur 7 zeigt ein weiteres Ausführungsbeispiel des Kennzeichnungsetiketts 1 in einer schematischen Aufsicht. Die Klebeschicht 11 kann großflächig ausgebildet sein und zwei separate Klebeabschnitte aufweisen, die voneinander beabstandet sind. Zwischen den zwei Klebeabschnitten der Klebeschicht 11 befindet sich der klebefreie Bereich 16, der die beiden Klebeabschnitte voneinander separiert. Die Klebeschicht 11 ist demgemäß in dem klebefreien Bereich 16 ausgespart, Der klebefreie Bereich 16 stellt eine Fügezone zum Ausbilden der Schweißnaht 7 bereit. Die Klebeschicht 11 ist gemäß dem in Figur 7 illustrierten Ausführungsbeispiel nicht zusammenhängend ausgebildet und im inneren Bereich der RFID-Antennenstruktur 6 und in einem äußeren Randbereich benachbart zu der Schweißnaht 7 angeordnet. Der von Klebstoff ausgesparte Bereich 16 ist an die Form der RFID-Antennenstruktur 6 angepasst und gemäß dem in Figur 7 illustrierten Ausführungsbeispiel im Wesentlichen rechteckig eingerichtet.

Die Schweißnaht 7 kann ferner gemäß den Figuren 8-10 mit einem vorgegebenen 2D-Sturkturverlauf ausgebildet werden. In den Figuren 8-10 ist jeweils schematisch eine Aufsicht auf mögliche Ausgestaltungen der Schweißnaht 7 gezeigt, die sich im Wesentlichen innerhalb der Haupterstreckungsebene des Kennzeichnungsetiketts 1 erstreckt. Die Schweißnaht 7 kann eine Wellenstruktur oder Zickzackstruktur (s. Figur 8), eine Sonnenstrahlstruktur (s. Figur 9) oder eine Waffelstruktur (s. Figur 10) aufweisen. Jeweils ist die Schweißnaht 7 gezielt verbreitert ausgebildet, um eine Eigensteifigkeit der Schweißverbindung im Vergleich zu einer schmalen geraden Schweißnaht zu erhöhen und zu einer verbesserten Steifigkeit des Kennzeichnungsetiketts 1 beizutragen. Solche Ausgestaltungen der Schweißnaht tragen ferner dazu bei, einem unerwünschten Faltenwurf des Kennzeichnungsetiketts 1 entgegenzuwirken und eine spätere verzugsfreie Applikation des Kennzeichnungsetiketts 1 auf oder an einem Gegenstand zu ermöglichen. Die Schweißnaht 7 kann dabei abschnittsweise ausgebildet werden und mehrere Ansatz- und Endpunkte aufweisen oder in einem Arbeitsgang durchgehend in sich verschlossen werden. Die illustrierten Linienabschnitte in den Figuren 9 und 10 können demgemäß eine jeweilige Schweißnaht realisieren, die zusammenhängend die dargestellte Schweißnaht 7 in Form eines Rahmens ausbilden oder zumindest dazu beitragen.

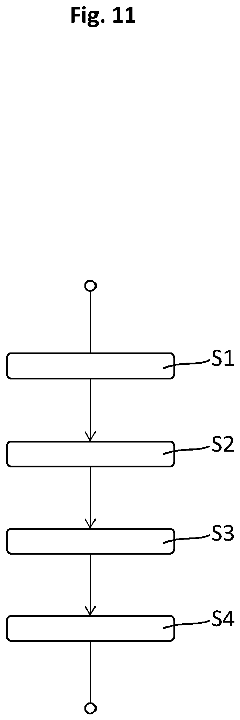

Figur 11 zeigt ein Ablaufdiagramm für ein Verfahren zum Herstellen einer Ausgestaltung des Kennzeichnungsetiketts 1. Eine Fertigung kann zum Beispiel mittels Ultraschallschweißen gemäß der Vorrichtung nach Figur 5 durchgeführt werden.

In einem Schritt S1 werden Komponenten für das Kennzeichnungsetikett 1 bereitgestellt. Der RFID-Transponders 3 wird mit dem RFID-Chip 5, der Antennenstruktur 6 und der Trägerschicht 4 bereitgestellt, auf der der RFID-Chip 5 und der Antennenstruktur 6 angeordnet sind. Ferner wird die Versiegelungsschicht in Form der Oberschicht 2 bereitgestellt.

In einem weiteren Schritt S2 werden der RFID-Transponder 3 und die Oberschicht 2 relativ zueinander positioniert, sodass der RFID-Chip 5 und/oder die Antennenstruktur 6 zwischen der Oberschicht 2 und der Trägerschicht 4 angeordnet sind.

In einem weiteren Schritt S3 erfolgt das Ausbilden der Schweißnaht 7 mittels Ultraschallschweißen. Dabei werden die Sonotrode 14 und der Amboss 15 zueinander geführt und in Kontakt gebracht, sodass die Oberschicht 2 und der Trägerschicht 4 gegeneinander gepresst und verschmolzen werden. Die Sonotrode 14 kann zum Beispiel wie ein Hammer gegen den Amboss 15 schlagen, sodass die Oberschicht 2 und die Trägerschicht 4 mittels longitudinalen Ultraschallschweißen stoffschlüssig verbunden werden. Alternativ oder zusätzlich kann die Sonotrode 14 gegen den Amboss 15 reiben, sodass die Oberschicht 2 und die Trägerschicht 4 mittels torsionalen Ultraschallschweißen stoffschlüssig verbunden werden. Durch das Ausbilden der Schweißnaht 7 sind der RFID-Chip 5 und/oder die Antennenstruktur 6 von der Schweißnaht 7 umgeben und zwischen der Oberschicht 2 und der Trägerschicht 4 eingeschlossen (s. Figuren 2 und 4).

Alternativ oder zusätzlich kann das Ausbilden der Schweißnaht 7 mittels thermischen Schweißen und/oder Laserschweißen und/oder Siegeln ausgebildet erfolgen.

In einem Schritt S4 kann ein Stanzvorgang und/oder ein Schneidvorgang durchgeführt werden, um eine Außenkontur des Kennzeichnungsetiketts 1 auszubilden. Bevorzugt können der Schritt S3 und S4 in einem Arbeitsgang durchgeführt werden. Zum Beispiel kann das Verschweißen der Oberschicht 2 mit der Trägerschicht 4 in Kombination mit Stanzen und/oder Laserschneiden ausgeführt werden.

Mittels der in Figur 5 illustrierten Vorrichtung kann die Schweißnaht 7 ferner mit einer vorgegebenen 3D-Kontur ausgebildet werden, um einen Grundradius in das Kennzeichnungsetikett 1 einzubringen und dieses mit einer vorgegebenen Krümmung auszubilden. Die Sonotrode 14 und der Amboss 15 weisen komplementäre Krümmungsoberflächen an den Arbeitskontakten auf, die betriebsgemäß einander zugewandt sind. Somit kann die Schweißnaht 7 bezogen auf die Stapelrichtung R vorgegeben gekrümmt ausgebildet werden und dadurch das Kennzeichnungsetikett 1 in Bezug auf seine Haupterstreckungsebene mit einer vorgegebenen Krümmung ausgestaltet werden.

Die Form oder Arbeitsflächen der Sonotrode 14 und des Amboss 15 sind vorzugsweise so gewählt, dass sie einer Außenform des Gegenstands 10, zum Beispiel einer Mantelfläche einer Spritze, entsprechen, an die das Kennzeichnungsetikett 1 angebracht werden soll. Im Vergleich zu einem ebenen Etikett, welches an eine gekrümmte Oberfläche aufgebracht werden soll, sind Rückstellkräfte reduziert, die das Kennzeichnungsetikett 1 in eine ebene Lage drängen würden. Somit kann ein besonders einfaches Applizieren des Kennzeichnungsetiketts 1 an der Spritze ermöglicht und zudem zu einem verbesserten Halt an dieser beigetragen werden.

Das Ausbilden des Kennzeichnungsetiketts 1 kann insbesondere mittels einer oder mehrere Materialbahnen fortlaufend erfolgen, sodass eine Vielzahl an Kennzeichnungsetiketten 1 einfach und kostengünstig herstellbar sind.

Durch das stoffschlüssige Verschweißen des Obermaterials und des Untermaterials des Kennzeichnungsetiketts 1 ist das RFID-Inlay innerhalb dieser verkapselt und vor Feuchtigkeit geschützt. Dabei kann Obermaterial beziehungsweise die Oberschicht 2 direkt mit dem Inlay-Substrat beziehungsweise der Trägerschicht 4 des RFID-Transponders 3 selbst verschweißt werden. Gemäß einer weiteren Ausführungsform kann das Obermaterial mit einer unteren Deckschicht beziehungsweise der Unterschicht 8 verschweißt werden. In beiden Fällen entsteht ein vollständig umschlossener Raum, der den RFID-Chip 5, die Antennenstruktur 6 und ggf. Klebestellen 11 vor Feuchtigkeit schützt. Ferner ist auch lediglich lokales Verschweißen direkt um den RFID-Chip 5 oder um die Antennenstruktur 6 herum möglich. Insbesondere kann ein lokales Verschweißen entlang des Etikettenrands 12 in Geometrie des Etikettenformats durchgeführt werden.

### Bezugszeichenliste

- 1: Kennzeichnungsetikett
- 2: Versiegelungsschicht / Oberschicht
- 3: RFID-Transponder
- 4: Versiegelungsschicht / Untergrund /Trägerschicht des RFID-Transponders
- 5: RFID-Chip des RFID-Transponders
- 6: Antennenstruktur des RFID-Transponders
- 7: Schweißnaht
- 8: Untergrund / Unterschicht
- 9: Klebeschicht
- 10: Gegenstand
- 11: Klebeschicht
- 12: Etikettenrand
- 13: Untergrund / Oberfläche des Gegenstandes
- 14: Sonotrode
- 15: Amboss
- 16: klebefreier Bereich / Fügezone

- R: Stapelrichtung des Kennzeichnungsetiketts
- S(i): Schritte eines Verfahrens zum Herstellen eines Kennzeichnungsetiketts

## Patentansprüche

1. Kennzeichnungsetikett (1), aufweisend:
- einen RFID-Transponder (3) mit einem RFID-Chip (5) und einer Antennenstruktur (6), die signaltechnisch miteinander gekoppelt sind, und
- eine Versiegelungsschicht (2, 4), die als flexibles Folienelement ausgebildet ist und den RFID-Transponder (3) bedeckt, **dadurch gekennzeichnet, dass** das flexible Folienelement eine Kunststofffolie ist, die dazu eingerichtet ist, mittels Schweißen stoffschlüssig mit einem Untergrund (4, 8, 13) verbunden zu werden, sodass der RFID-Chip (5) und/oder die Antennenstruktur (6) von einer Schweißnaht (7) umgeben und zwischen der Versiegelungsschicht (2, 4) und dem Untergrund (4, 8, 13) eingeschlossen ist.

2. Kennzeichnungsetikett (1) nach Anspruch 1, bei dem der RFID-Transponder (3) eine Trägerschicht (4) umfasst, auf der der RFID-Chip (5) und die Antennenstruktur (6) angeordnet sind, und bei dem die Trägerschicht (4) die Versiegelungsschicht oder den Untergrund ausbildet, die mittels der Schweißnaht (7) stoffschlüssig miteinander verbunden sind oder dazu eingerichtet sind, miteinander verbunden zu werden.

3. Kennzeichnungsetikett (1) nach einem der vorhergehenden Ansprüche, aufweisend: eine Unterschicht (8), die den Untergrund ausbildet, mit dem die Versiegelungsschicht (2, 4) mittels der Schweißnaht (7) stoffschlüssig verbunden ist.

4. Kennzeichnungsetikett (1) nach einem der vorhergehenden Ansprüche, bei dem die Versiegelungsschicht (2, 4) mittels einer Klebeschicht (11) mit dem Untergrund (4, 8, 13) verbunden ist, sodass die Klebeschicht (11) zumindest anteilig innerhalb der Schweißnaht (7) von der Schweißnaht (7) umgeben und zwischen der Versiegelungsschicht (2, 4) und der Untergrund (4, 8, 13) eingeschlossen ist.

5. Kennzeichnungsetikett (1) nach einem der vorhergehenden Ansprüche, bei dem die Schweißnaht (7) bezogen auf eine Haupterstreckungsebene des Kennzeichnungsetiketts (1) mit einer vorgegebenen Breite im Bereich von einschließlich 0,2 mm bis einschließlich 10 mm ausgebildet ist und/oder mit einem vorgegebenen Strukturverlauf ausgebildet ist und eine Wellenstruktur, eine Zickzackstruktur und/oder eine Kreuzgitterstruktur aufweist.

6. Kennzeichnungsetikett (1) nach einem der vorhergehenden Ansprüche, bei dem die Schweißnaht (7) umlaufend um den RFID-Chip (5) und/oder die Antennenstruktur (6) ausgebildet ist.

7. Kennzeichnungsetikett (1) nach einem der vorhergehenden Ansprüche, bei dem die Versiegelungsschicht (2, 4) und/oder der Untergrund (4, 8, 13) vorgebogen mittels der Schweißnaht (7) stoffschlüssig miteinander verbunden sind, sodass das Kennzeichnungsetikett (1) ein vorgegeben gekrümmtes Kennzeichnungsmedium ausbildet.

8. Kennzeichnungsetikett (1) nach einem der vorhergehenden Ansprüche, aufweisend: ein Folienelement, das mit dem RFID-Transponder (3), mit der Versiegelungsschicht (2, 4) und/oder mit dem Untergrund (4, 8, 13) gekoppelt ist und das dazu eingerichtet ist, einer Feuchtigkeitsaufnahme in den eingeschlossenen Bereich mit dem RFID-Chip (5) und/oder der Antennenstruktur (6) entgegenzuwirken.

9. Kennzeichnungsetikett (1) nach einem der vorhergehenden Ansprüche, aufweisend: ein Funktionselement, das mit dem RFID-Transponder (3), mit der Versiegelungsschicht (2, 4) und/oder mit dem Untergrund (4, 8, 13) gekoppelt ist und das dazu eingerichtet ist, einen mechanischen Schutz für den RFID-Chip (5) und/oder die Antennenstruktur (6) auszubilden.

10. Kennzeichnungsetikett (1) nach einem der vorhergehenden Ansprüche, bei dem die Versiegelungsschicht (2, 4) und/oder der Untergrund (4, 8, 13) als transparentes Folienelement ausgebildet ist.

11. Kennzeichnungssystem, umfassend:
- einen Gegenstand (10), und
- ein Kennzeichnungsetikett (1) nach einem der vorhergehenden Ansprüche, das mit dem Gegenstand (10) gekoppelt ist.

12. Kennzeichnungssystem nach Anspruch 11, bei dem eine Oberfläche (13) des Gegenstands (10) den Untergrund für die Versiegelungsschicht (2, 4) ausbildet, mit dem die Versiegelungsschicht (2, 4) des Kennzeichnungsetiketts (1) mittels der Schweißnaht (7) stoffschlüssig verbunden ist.

13. Verfahren zum Herstellen eines Kennzeichnungsetiketts (1), umfassend:
- Bereitstellen eines RFID-Transponders (3) mit einem RFID-Chip (5) und einer Antennenstruktur (6), die signaltechnisch miteinander gekoppelt sind,
- Bereitstellen einer Versiegelungsschicht (2, 4) als flexibles Folienelement in Form einer Kunststofffolie,
- Anbringen des RFID-Transponders (3) und der Versiegelungsschicht (2) an einem Untergrund (4, 8, 13), sodass der RFID-Chip (5) und/oder die Antennenstruktur (6) zwischen der Versiegelungsschicht (2, 4) und dem Untergrund (4, 8, 13) angeordnet ist, und
- Ausbilden einer Schweißnaht (7) mittels Schweißen der Versiegelungsschicht (2, 4), sodass der RFID-Chip (5) und/oder die Antennenstruktur (6) von der Schweißnaht (7) umgeben und zwischen der Versiegelungsschicht (2, 4) und dem Untergrund (4, 8, 13) eingeschlossen ist.

14. Verfahren nach Anspruch 13, umfassend:
Durchführen eines Stanzvorgangs und/oder eines Schneidvorgangs und Ausbilden einer Außenkontur des Kennzeichnungsetiketts (1), wobei das Schweißen der Versiegelungsschicht (2, 4) und der Stanzvorgang und/oder der Schneidvorgang in einem Arbeitsschritt durchgeführt werden.

15. Verfahren nach einem der Ansprüche 13 oder 14, umfassend:
Bereitstellen des Untergrunds, mit dem die Versiegelungsschicht (2, 4) verschweißt wird, in Form einer Trägerschicht (4) des RFID-Transponders (3) und/oder in Form einer Unterschicht (8) und/oder in Form einer Oberfläche (13) eines Gegenstands (10), der mit dem Kennzeichnungsetikett (1) gekennzeichnet wird.

## Claims

1. Marking label (1), comprising:
- an RFID transponder (3) with an RFID chip (5) and an antenna structure (6) that are electrically coupled to one another, and
- a sealing layer (2, 4) that is formed as a flexible film element and covers the RFID transponder (3), **characterized in that** the flexible film element is a plastic film that is adapted to be bonded by welding to a substrate (4, 8, 13) by means of welding, such that the RFID chip (5) and/or the antenna structure (6) is surrounded by a weld seam (7) and enclosed between the sealing layer (2, 4) and the substrate (4, 8, 13).

2. Marking label (1) according to claim 1, wherein the RFID transponder (3) comprises a carrier layer (4) on which the RFID chip (5) and the antenna structure (6) are arranged, and in which the carrier layer (4) forms the sealing layer or the substrate, which are joined together by material bonding via the weld seam (7) or are configured to be joined together.

3. Marking label (1) according to one of the preceding claims, comprising:
a bottom layer (8) that forms the substrate, to which the sealing layer (2, 4) is bond-jointed by means of the weld seam (7).

4. Marking label (1) according to any of the preceding claims, wherein the sealing layer (2, 4) is connected to the substrate (4, 8, 13) via an adhesive layer (11), such that the adhesive layer (11) is at least partially surrounded by the weld seam (7) within the weld seam (7) and is enclosed between the sealing layer (2, 4) and the substrate (4, 8, 13).

5. Marking label (1) according to any of the preceding claims, wherein the weld seam (7), relative to a principal plane of extension of the marking label (1) has a predetermined width in the range from 0.2 mm inclusive to 10 mm inclusive and/or has a predetermined structural pattern and features a wavy structure, a zigzag structure, and/or a cross-grid structure.

6. Marking label (1) according to any of the preceding claims, wherein the weld seam (7) is formed circumferentially around the RFID chip (5) and/or the antenna structure (6).

7. Marking label (1) according to any of the preceding claims, wherein the sealing layer (2, 4) and/or the substrate (4, 8, 13) are pre-curved and bonded together via the weld seam (7) so that the marking label (1) forms a predetermined curved identification medium.

8. Marking label (1) according to one of the preceding claims, comprising:
a film element that is coupled to the RFID transponder (3), the sealing layer (2, 4), and/or the substrate (4, 8, 13), and which is configured to counteract moisture absorption into the enclosed area containing the RFID chip (5) and/or the antenna structure (6).

9. Marking label (1) according to any one of the preceding claims, comprising:
a functional element that is coupled to the RFID transponder (3), the sealing layer (2, 4), and/or the substrate (4, 8, 13), and which is configured to provide mechanical protection for the RFID chip (5) and/or the antenna structure (6).

10. Marking label (1) according to any of the preceding claims, wherein the sealing layer (2, 4) and/or the substrate (4, 8, 13) is formed as a transparent film element.

11. Marking system, comprising:
- an object (10), and
- a marking label (1) according to any one of the preceding claims, which is coupled to the object (10).

12. Marking system according to claim 11, wherein a surface (13) of the object (10) forms the substrate for the sealing layer (2, 4), to which the sealing layer (2, 4) of the marking label (1) is materially bonded by means of the weld seam (7).

13. Method for manufacturing a marking label (1), comprising:
- providing an RFID transponder (3) with an RFID chip (5) and an antenna structure (6) that are electrically coupled to one another,
- providing a sealing layer (2, 4) as a flexible film element in the form of a plastic film,
- attaching the RFID transponder (3) and the sealing layer (2) to a substrate (4, 8, 13) such that the RFID chip (5) and/or the antenna structure (6) is positioned between the sealing layer (2, 4) and the substrate (4, 8, 13), and
- forming a weld seam (7) by welding the sealing layer (2, 4) so that the RFID chip (5) and/or the antenna structure (6) is surrounded by the weld seam (7) and enclosed between the sealing layer (2, 4) and the substrate (4, 8, 13).

14. Method according to claim 13, comprising:
performing a die-cutting operation and/or a cutting operation and forming an outer contour of the marking label (1), wherein the welding of the sealing layer (2, 4) and the die-cutting operation and/or the cutting operation are performed in a single step.

15. Method according to any one of claims 13 or 14, comprising:
providing the substrate to which the sealing layer (2, 4) is welded to, in the form of a carrier layer (4) of the RFID transponder (3) and/or in the form of a base layer (8) and/or in the form of a surface (13) of an object (10) to be labeled with the marking label (1).

## Revendications

1. Étiquette de marquage (1), comprenant :
- un transpondeur RFID (3) comportant une puce RFID (5) et une structure d'antenne (6), qui sont couplées de manière opérationnelle l'une à l'autre pour la transmission de signaux, et
- une couche de scellement (2, 4), conçue sous la forme d'un élément de film flexible et recouvrant le transpondeur RFID (3), **caractérisée en ce que** l'élément de film flexible est un film en matière plastique configuré pour être relié par soudage de manière solidaire à un substrat (4, 8, 13), de telle sorte que la puce RFID (5) et/ou la structure d'antenne (6) est/sont entourée(s) par un cordon de soudure (7) et enfermée(s) entre la couche de scellement (2, 4) et le substrat (4, 8, 13).

2. L'étiquette de marquage (1) selon la revendication 1, dans laquelle le transpondeur RFID (3) comprend une couche support (4), sur laquelle sont disposées la puce RFID (5) et la structure d'antenne (6), et dans laquelle la couche support (4) forme la couche de scellement ou le substrat, lesquels sont reliés l'un à l'autre de manière solidaire au moyen du cordon de soudure (7) ou sont configurés pour être reliés l'un à l'autre.

3. L'étiquette de marquage (1) selon l'une quelconque des revendications précédentes, comprenant :
une couche sous-jacente (8) formant le substrat auquel la couche de scellement (2, 4) est reliée de manière solidaire au moyen du cordon de soudure (7).

4. L'étiquette de marquage (1) selon l'une quelconque des revendications précédentes, dans laquelle la couche de scellement (2, 4) est reliée au substrat (4, 8, 13) au moyen d'une couche adhésive (11), de telle sorte que la couche adhésive (11) est, au moins en partie, entourée par le cordon de soudure (7) à l'intérieur de celui-ci et enfermée entre la couche de scellement (2, 4) et le substrat (4, 8, 13).

5. L'étiquette de marquage (1) selon l'une quelconque des revendications précédentes, dans laquelle le cordon de soudure (7), par rapport à un plan principal d'extension de l'étiquette de marquage (1), est formé avec une largeur prédéterminée comprise entre 0,2 mm et 10 mm, bornes incluses, et/ou présente un profil structural prédéterminé et comprend une structure ondulée, une structure en zigzag et/ou une structure en grille croisée.

6. L'étiquette de marquage (1) selon l'une quelconque des revendications précédentes, dans laquelle le cordon de soudure (7) est formé de telle sorte qu'il s'étend de manière continue autour de la puce RFID (5) et/ou de la structure d'antenne (6).

7. L'étiquette de marquage (1) selon l'une quelconque des revendications précédentes, dans laquelle la couche de scellement (2, 4) et/ou le substrat (4, 8, 13) sont reliés l'un à l'autre au moyen du cordon de soudure (7) dans un état pré-courbé, de telle sorte que l'étiquette de marquage (1) forme un moyen de marquage présentant une courbure prédéterminée.

8. L'étiquette de marquage (1) selon l'une quelconque des revendications précédentes, comprenant :
un élément de film qui est couplé au transpondeur RFID (3), à la couche de scellement (2, 4) et/ou au substrat (4, 8, 13), et configuré pour empêcher la pénétration d'humidité dans la région enfermée contenant la puce RFID (5) et/ou la structure d'antenne (6).

9. L'étiquette de marquage (1) selon l'une quelconque des revendications précédentes, comprenant :
un élément fonctionnel qui est couplé au transpondeur RFID (3), à la couche de scellement (2, 4) et/ou au substrat (4, 8, 13), et configuré pour former une protection mécanique de la puce RFID (5) et/ou de la structure d'antenne (6).

10. L'étiquette de marquage (1) selon l'une quelconque des revendications précédentes, dans laquelle la couche de scellement (2, 4) et/ou le substrat (4, 8, 13) est conçu sous la forme d'un élément de film transparent.

11. Système de marquage, comprenant :
un article (10) ; et
une étiquette de marquage (1) selon l'une quelconque des revendications précédentes, qui est couplée à l'article (10).

12. Le système de marquage selon la revendication 11, dans lequel une surface (13) de l'article (10) forme le substrat de la couche de scellement (2, 4), auquel la couche de scellement (2, 4) de l'étiquette de marquage (1) est reliée de manière solidaire au moyen du cordon de soudure (7).

13. Procédé de fabrication d'une étiquette de marquage (1), comprenant :
la mise à disposition d'un transpondeur RFID (3) comportant une puce RFID (5) et une structure d'antenne (6), qui sont couplées de manière opérationnelle l'une à l'autre pour la transmission de signaux,
la mise à disposition d'une couche de scellement (2, 4) sous la forme d'un élément de film flexible constitué d'un film en matière plastique,
l'application du transpondeur RFID (3) et de la couche de scellement (2, 4) sur un substrat (4, 8, 13), de telle sorte que la puce RFID (5) et/ou la structure d'antenne (6) est/sont disposée(s) entre la couche de scellement (2, 4) et le substrat (4, 8, 13), et
la formation d'un cordon de soudure (7) par soudage de la couche de scellement (2, 4), de telle sorte que la puce RFID (5) et/ou la structure d'antenne (6) est/sont entourée(s) par le cordon de soudure (7) et enfermée(s) entre la couche de scellement (2, 4) et le substrat (4, 8, 13).

14. Le procédé selon la revendication 13, comprenant :
la réalisation d'une opération de poinçonnage et/ou d'une opération de découpe et la formation d'un contour extérieur de l'étiquette de marquage (1), le soudage de la couche de scellement (2, 4) et l'opération de poinçonnage et/ou de découpe étant réalisés en une seule étape.

15. Le procédé selon la revendication 13 ou 14, comprenant :
la mise à disposition du substrat auquel la couche de scellement (2, 4) est soudée, sous la forme d'une couche support (4) du transpondeur RFID (3), et/ou sous la forme d'une couche sous-jacente (8), et/ou sous la forme d'une surface (13) d'un article (10) destiné à être marqué avec l'étiquette de marquage (1).
